# EUROPÄISCHE PATENTSCHRIFT

(11) **EP 1 746 121 B1**
(45) Veröffentlichungstag und Bekanntmachung des Hinweises auf die Patenterteilung: **02.07.2008**
(21) Anmeldenummer: 06010750.5
(22) Anmeldetag: 24.05.2006
(51) Int. Cl.: C08G 77/34

(54) **Verfahren zur Verarbeitung von Gemischen in Anwesenheit von Füllkörpern aus fluorierten Vinylpolymeren**
Process for treating mixtures in presence of packings of fluorated vinylpolymers
Procédé pour le traitement des mixtures en présence de corps de remplissage de vinylpolymères fluorés

(30) Priorität: 14.07.2005 DE 102005032947
(43) Veröffentlichungstag der Anmeldung: 24.01.2007
(73) Patentinhaber: Wacker Chemie AG, 81737 München (DE)
(72) Erfinder: Beutlhauser, Stephan, 84561 Mehring (DE); Enthammer, Helmut, 5280 Braunau (AT); Käppler, Klaus, Dr., 01326 Dresden (DE)
(74) Vertreter: Fritz, Helmut

(56) Entgegenhaltungen:
- US-A- 4 032 557
- US-A- 4 448 981

## Beschreibung

Die Erfindung betrifft ein Verfahren zur Verarbeitung von Gemischen, die HCl, H₂O und Siloxane enthalten, in Anwesenheit von Füllkörpern aus fluorierten Vinylpolymeren.

Die Herstellung von Siliconölen oder Polyorganosiloxanen erfolgt durch Polymerisation cyclischer oder linearer Polydiorganosiloxan-Zwischenprodukte, die durch Hydrolyse und Polykondensation von Diorganodichlorsilan erzeugt werden. Als Quelle für das zur Hydrolyse benötigte Reaktionswasser dient vielfach Salzsäure. Der bei der Hydrolyse anfallende Chlorwasserstoff wird mit Methanol zu Chlormethan umgesetzt und bei der Synthese von Dimethyldichlorsilan nach dem Direktsyntheseverfahren wieder eingesetzt.

Dabei fallen Gemische an, die HCl, H₂O und Siloxane enthalten. Beipielsweise beschreiben US 3493595 A und US 5476916 A die Herstellung von α,ω-Dihydroxypolydiorganosiloxan über ein Rohhydrolysat, das aus cyclischen und linearen Chlor enthaltenden Polydiorganosiloxanen besteht. Zur Reduzierung des Chlorgehalts und zur Abtrennung der Cyclen wird das Rohhydrolysat im Gegenstrom mit Wasserdampf behandelt. Das geschieht zweckmässigerweise in einer mit Füllkörpern gefüllten Kolonne. Hierbei wird eine mit Keramikfüllkörpern gefüllte Kolonne eingesetzt. Die Keramik besteht aus Alumosilikaten mit Begleitoxiden der Metalle die ausgewählt werden aus Ti, Fe, K, Na, Ca und Mg. Beispielsweise sind Sattelkörper, Berl-Sattelkörper, Pall-Ringe oder Sonderformen aus Keramik einsetzbar.

Es hat sich herausgestellt, dass die Keramik unter den herrschenden Prozessbedingungen chemisch angegriffen wird. Es kommt in Oberflächennähe zum Herauslösen von vor allem Al und Fe aus dem Verbund. Die Folge sind Materialdefekte und die Bildung von Hohlräumen, Rissen und Spalten in der Alumosilikatstruktur. Die Oberflächeneigenschaften verändern sich. Die mechanische Stabilität der Füllkörper nimmt ab. Die Füllkörper zerbrechen leicht. Mit dem Sumpfprodukt der Kolonne wird eine erhöhte Menge schlecht abtrennbaren Füllkörperabriebs ausgetragen. Die Trennleistung der Kolonne nimmt stetig ab. Die Füllkörper müssen im Rhythmus von 2 bis 3 Jahren vollständig ausgetauscht werden. Dies verursacht Stillstandszeiten und Kosten für die Neuanschaffung und Entsorgung der Füllkörper.

Die gebildeten Al- und Fe-Verbindungen, wie Chloride, Oxychloride oder Hydroxychloride verbleiben in gelöster oder suspendierter Form im α,ω-Dihydroxypolydiorganosiloxan. Diese Verbindungen fungieren als Kondensationskatalysatoren und verursachen unerwünschte Nachkondensation der α,ω-Dihydroxypolydiorganosiloxane. Die Viskosität steigt unkontrolliert an. Ausgeschiedenes Wasser trübt die Produkte ein und beeinträchtigt ihre Lagerbeständigkeit. Die weitere Verarbeitung zu Polymeren wird durch die schwankende Qualität, den schwankenden Wassergehalt und die enthaltenen Al- und Fe-Verbindungen erschwert.

Der Erfindung liegt die Aufgabe zugrunde, ein Verfahren zur Verarbeitung von Gemischen bereitzustellen, die HCl, H₂O und Siloxane enthalten, bei dem die Füllkörper haltbarer sind.

Gegenstand der Erfindung ist ein Verfahren zur Verarbeitung von Gemischen, die HCl, H₂O und Siloxane enthalten, in Anwesenheit von Füllkörpern aus fluorierten Vinylpolymeren.

Die Füllkörper aus fluorierten Vinylpolymeren sind unter den Bedingungen, die bei der Verarbeitung von Gemischen, die HCl, H₂O und Siloxane enthalten, vorherrschen chemisch, mechanisch und thermisch stabil.

Die fluoriertenVinylpolymere können teilweise oder vollständig fluoriert sein. Bevorzugt sind fluorierte Vinylpolymere, die aufgebaut sind aus Struktureinheiten der allgemeinen Formel 1

-(CR₂-CF₂)ₙ- (1),

wobei R Wasserstoff oder Fluor bedeutet.
Vorzugsweise weist n Werte von mindestens 100, insbesondere mindestens 500 auf.
Besonders bevorzugt sind Polyvinylidenfluorid (PVDF) und Polytetrafluorethylen (PTFE).

Die Formen der Füllkörper können beliebig sein, beispielsweise sind Ringe, Spiralen und Sättel geeignet, die vorzugsweise zur Erhöhung der Oberfläche durchbrochene Wandungen und/oder Querverstrebungen aufweisen. Bevorzugt sind Pall-Ringe.

Die verarbeiteten Gemische können neben HCl, H₂O und Siloxanen weitere aggressive Bestandteile, wie Alkanole, Chlorsilane und Chlorkohlenwasserstoffe enthalten. Als Alkanole sind Methanol und Ethanol, als Chlorkohlenwasserstoff ist Chlormethan häufig in den Gemischen vorhanden. HCl und H₂O können beispielsweise als verdünnte Salzsäure, als gesättigte Salzsäure oder als HCl-Gas in Gegenwart von kleinen Mengen an H₂O vorliegen. Siloxane können beispielsweise als lineare oder cyclische Siloxane vorliegen, die reaktive Gruppen, wie -OH und Halogene tragen können. Vorzugsweise liegen die linearen Siloxane als α,ω-Dihydroxypolydiorganosiloxane vor, die teilweise noch Halogene tragen.

Die bei dem Verfahren vorherrschenden Drucke bewegen sich vorzugsweise bei 0,1 bis 100 bar. Das Verfahren wird vorzugsweise bei 70 bis 200°C betrieben, insbesondere bei 80 bis 150°C.

Die Verarbeitung der Gemische, die HCl, H₂O und Siloxane enthalten, findet bevorzugt in Kolonnen statt. Bei der Verarbeitung handelt es sich vorzugsweise um Reinigungsschritte, wie Entsäuerung, Entfernung von Halogeniden aus Siloxanen oder um Destillationsschritte.

Bevorzugte Verfahren sind Teilschritte eines Verfahrens zur Herstellung von Polydimethylsiloxanen, bei denen Dimethyldichlorsilan mit in Salzsäure vorhandenem Wasser zu einem Rohhydrolysat, bestehend aus cyclischen und linearen, Chlor enthaltenden Polydimethylsiloxanen und gasförmigem Chlorwasserstoff umgesetzt wird.

Besonders bevorzugt wird das erfindungsgemässe Verfahren in einem solchen Verfahren zur Herstellung von Polydimethylsiloxanen angewendet, bei dem
in einem ersten Schritt Dimethyldichlorsilan mit in Salzsäure vorhandenem Wasser zu einem Rohhydrolysat, bestehend aus cyclischen und linearen, Chlor enthaltenden Polydimethylsiloxanen und gasförmigem Chlorwasserstoff umgesetzt wird und
in einem zweiten Schritt das Rohhydrolysat zur Reduzierung des Chlorgehalts mit Wasserdampf unter Bildung von Salzsäure behandelt wird,
wobei im zweiten Schritt gebildete Salzsäure im ersten Schritt eingesetzt wird.
Dieses Verfahren ist an sich bekannt aus US 5476916 A. Im zweiten Schritt kann eine Kolonne eingesetzt werden, die mit Füllkörpern aus fluorierten Vinylpolymeren gefüllt ist.

Ebenfalls besonders bevorzugt wird das erfindungsgemässe Verfahren in einem solchen Verfahren zur Herstellung von Polydimethylsiloxanen angewendet, bei dem
in einem ersten Schritt Diorganodichlorsilan mit in Salzsäure vorhandenem Wasser zu einem Rohhydrolysat, bestehend aus cyclischen und linearen, Chlor enthaltenden Polydiorganosiloxanen und gasförmigem Chlorwasserstoff umgesetzt wird,
in einem zweiten Schritt das Rohhydrolysat zur Reduzierung des Chlorgehalts mit Wasserdampf unter Bildung von Salzsäure behandelt wird, wobei im zweiten Schritt gebildete Salzsäure im ersten Schritt eingesetzt wird,
in einem dritten Schritt das Rohhydrolysat mit reduziertem Chlorgehalt zur weiteren Reduzierung des Chlorgehalts mit Wasserdampf unter Bildung von Salzsäure und Polydiorganosiloxanen enthaltendem Sauerwasser behandelt wird,
wobei das Sauerwasser aufgetrennt wird in säurefreies und säurehaltiges Wasser, das säurehaltige Wasser verdampft wird und der erhaltene säurehaltige Wasserdampf im zweiten Schritt eingesetzt wird.
Dieses Verfahren ist an sich bekannt aus DE 19909547 A. Im zweiten und dritten Schritt können Kolonnen eingesetzt werden, die mit Füllkörpern aus fluorierten Vinylpolymeren gefüllt sind.

Weitere bevorzugte Verfahren sind Verfahren zur Rückgewinnung von Alkohol aus HCl-sauren Wasser-Alkohol-Mischungen, die Siloxane enthalten. Es handelt sich hier bevorzugt um Destillationsverfahren, bei denen die Füllkörper aus fluorierten Vinylpolymeren eingesetzt werden.

Besonders bevorzugt ist ein solches Verfahren zur Rückgewinnung von Methanol aus HCl-sauren Wasser-Alkohol-Mischungen, die bei der Herstellung von Chlormethan aus Methanol und HCl anfallen.

Ebenfalls besonders bevorzugt ist ein solches Verfahren zur Rückgewinnung von Alkohol, insbesondere Methanol und Ethanol aus Prozessen, bei denen Alkoxysilane mit Salzsäure hydrolysiert werden. Dieses Verfahren ist an sich bekannt aus US 6069220 A.

## Patentansprüche

1. Verfahren zur Verarbeitung von Gemischen, die HCl, H₂O und Siloxane enthalten, in Anwesenheit von Füllkörpern aus fluorierten Vinylpolymeren.

2. Verfahren nach Anspruch 1, bei dem die Vinylpolymere aufgebaut sind aus Struktureinheiten der allgemeinen Formel 1
-(CR₂-CF₂)ₙ- (1),
wobei R Wasserstoff oder Fluor bedeutet und n Werte von mindestens 100 aufweist.

3. Verfahren nach Anspruch 1 oder 2, bei dem die Vinylpolymere ausgewählt werden aus Polyvinylidenfluorid (PVDF) und Polytetrafluorethylen (PTFE).

4. Verfahren nach Anspruch 1 bis 3, welches bei 70 bis 200°C betrieben wird.

5. Verfahren nach Anspruch 1 bis 4, bei dem es sich bei der Verarbeitung um Reinigungsschritte handelt, die ausgewählt werden aus Entsäuerung, Entferung von Halogeniden aus Siloxanen und um Destillationsschritte.

## Claims

1. Method for processing mixtures which contain HCl, H₂O and siloxanes in the presence of packings comprising fluorinated vinyl polymers.

2. Method according to Claim 1, in which the vinyl polymers are composed of structural units of the general formula 1
-(CR₂-CF₂)ₙ- (1),
in which R is hydrogen or fluorine and n has values of at least 100.

3. Method according to Claim 1 or 2, in which the vinyl polymers are selected from polyvinylidine fluoride (PVDF) and polytetrafluoroethylene (PTFE).

4. Method according to any of Claims 1 to 3, which is operated at from 70 to 200°C.

5. Method according to any of Claims 1 to 4, in which the processing comprises purification steps which are selected from deacidification, removal of halides from siloxanes and distillation steps.

## Revendications

1. Procédé de traitement de mélanges contenant du HCl, H₂O et des siloxanes, en présence de corps de remplissage de polymères de vinyle fluorés.

2. Procédé selon la revendication 1, dans lequel les polymères de vinyle sont constitués de motifs structurels de formule générale 1
- (CR₂-CF₂)ₙ- (1)
dans laquelle R désigne un atome d'hydrogène ou de fluor et n des valeurs d'au moins 100.

3. Procédé selon la revendication 1 ou 2, dans lequel les polymères de vinyle sont choisis dans le groupe comprenant le fluorure de polyvinylidène (PVDF) et le polytétrafluoroéthylène (PTFE).

4. Procédé selon la revendication 1 à 3 qui est mis en oeuvre à des températures entre 70 et 200 °C.

5. Procédé selon la revendication 1 à 4, dans lequel le traitement est constitué d'étapes d'épuration qui sont choisies parmi la désacidification, l'élimination d'halogénures de siloxanes et d'étapes de distillation.
